# EUROPÄISCHE PATENTSCHRIFT

(11) **EP 3 014 640 B1**
(45) Veröffentlichungstag und Bekanntmachung des Hinweises auf die Patenterteilung: **17.01.2018**
(21) Anmeldenummer: 14744269.3
(22) Anmeldetag: 27.06.2014
(51) Int. Cl.: H01G 9/08, H01G 9/12, H01G 2/10, H01G 4/224

(54) **ELEKTRISCHER KONDENSATOR FÜR KÄLTEMITTELVERDICHTER**
ELECTRIC CAPACITOR FOR A COOLANT COMPRESSOR
CONDENSATEUR ÉLECTRIQUE ET COMPRESSEUR FRIGORIFIQUE

(30) Priorität: 27.06.2013 AT 2142013 U
(43) Veröffentlichungstag der Anmeldung: 04.05.2016
(73) Patentinhaber: Secop GmbH, 24939 Flensburg (DE)
(72) Erfinder: WEBER, Bernard, A-8291 Burgauberg (AT)
(74) Vertreter: KLIMENT & HENHAPEL
(86) Internationale Anmeldenummer: PCT/AT2014/050147
(87) Internationale Veröffentlichungsnummer: WO 2014/205474

(56) Entgegenhaltungen:
- DE-A1- 2 430 437
- DE-U1- 8 324 681
- JP-A- 2012 064 842

## Beschreibung

Die Erfindung bezieht sich auf einen elektrischen Kondensator mit mindestens einem Kondensatorwickel, einem den Kondensatorwickel umschließenden zylindrischen Gehäuse aus Metall, elektrischen Anschlüssen und im Gehäuseinneren verlaufende Anschlussleitungen, die den Kondensatorwickel mit den Anschlüssen elektrisch verbinden, wobei zumindest eine Anschlussleitung eine Sollbruchstelle aufweist, und wobei im Mantel des Gehäuses zumindest eine umlaufende Sicke ausgebildet ist, die das Gehäuse in einen ersten Abschnitt und einen zweiten Abschnitt teilt und durch Überdruck im Gehäuseinneren auffaltbar ist, wobei der erste Abschnitt den Kondensatorwickel umschließt und der zweite Abschnitt die Anschlüsse trägt.

Im Stand der Technik sind selbstheilende Kondensatoren bekannt, die mit einem Überdruckschutz ausgestattet sind. Im Falle eines Kurzschlusses bzw. Spannungsdurchschlages durch das Dielektrikum verdampft die Metallschicht um den Durchschlagspunkt aufgrund der hohen Temperatur des sich zwischen den Elektroden bildenden Lichtbogens. Innerhalb von Mikrosekunden wird der Metalldampf durch den beim Durchschlag entstehenden Druck vom Zentrum des Durchschlages weggedrückt, sodass sich eine elektrisch nicht-leitende Zone im Bereich des Durchschlagspunktes ausbildet, wodurch die Funktionen des Kondensators aufrecht bleiben. Aufgrund ihrer Regenerationsfähigkeit müssen selbstheilende Kondensatoren daher nicht gesondert gegen Kurzschlüsse gesichert sein.

Das Selbstheilvermögen des Dielektrikums verringert sich jedoch mit zunehmendem Alter und unter ständiger Überlastung, wodurch sich das Risiko eines nicht-heilenden Kurzschlusses stark erhöht.

Aus diesem Grund besitzen derartige Kondensatoren einen sogenannten Überdruck-Abschaltmechanismus bzw. eine Abreißsicherung, wodurch einerseits ein Bersten des hermetisch dichten metallischen Gehäuses verhindert wird und andererseits eine Kontaktunterbrechung erfolgt. Ein Überdruck im Kondensator bewirkt eine Verlängerung des zylindrischen Gehäuses durch Auffalten einer umlaufenden Sicke im Gehäusemantel, wobei der die Anschlüsse tragende obere Abschnitt des Gehäuses nach oben gedrückt wird. Zumindest eine der innerhalb des Kondensators verlaufenden Anschlussleitungen wird durch die Verlängerung des Gehäuses gedehnt und reißt an einer Sollbruchstelle, wodurch die Stromzufuhr zu den Kondensatorwickeln irreversibel unterbrochen wird. In diesem Zusammenhang darf der Begriff "selbstheilend" nicht mit "ausfallssicher" gleichgesetzt werden.

Mit einem derartigen Überdruckschutz ausgestattete Kondensatoren werden auch Typ B/Klasse P2 Kondensatoren genannt, da sie die Sicherheitsvorschreibungen von Normen erfüllen.

Elektrolytkondensatoren weisen jedoch der Regel nach einen anderen Versagensmechanismus auf: Ein Überdruck im Elektrolytkondensator bewirkt, dass sich Sollbruchstellen im Gehäuse öffnen und als Ventil fungieren, so dass Elektrolyt aus dem Kondensator austreten kann und der Elektrolytkondensator austrocknet. Solche Elektrolytkondensatoren sind beispielsweise aus der JP 2012-064842 A, JP 2001-167987 A und der DE 19811862 C1 bekannt.

Ein anderer Typ von Kondensatoren, nämlich P0 Kondensatoren wird im Folgenden kurz beschrieben. Ein P0 Kondensator besitzt im Gegensatz zu P2 Kondensatoren keine spezifischen Einrichtungen, die den Ausfall eines solchen Kondensators sicher machen. Im Falle eines Ausfalls oder einer Überlastung kann der Kondensatorwickel überhitzen und schmelzen, zu rauchen beginnen und sogar Feuer fangen. Geschmolzenes Material kann in die Umgebung spritzen.

Es ist daher erforderlich, bestimmte Maßnahmen bei der Verwendung derartiger Kondensatoren zu treffen, um die Sicherheit von Personen und Gegenständen zu gewährleisten. Die Empfehlungen für derartige Kondensatoren umfassen u.a.: P0 Kondensatoren dürfen in Beleuchtungskörpern nur verwendet werden, wenn der Kondensator in unkritischer Umgebung (nicht-entflammbare Materialien) angeordnet ist. Kondensatoren ohne Überdruck-Abschaltmechanismus bzw. Abreißsicherung müssen in einem zusätzlichen Metallgehäuse eingekapselt sein, welches das Entflammen von entzündlichen Materialen verhindert.

Nur Kondensatoren mit einem Überdruck-Abschaltmechanismus bzw. einer Abreißsicherung sind geeignet für einen Einsatz in sensitiven Umgebungen. Im Zweifel sind sichere Kondensatoren einzusetzen.

Bislang gibt es zwei mit den Sicherheitsvorschriften kompatible Möglichkeiten: Der der Einsatz von P2 Kondensatoren mit Erdung oder der Einsatz von P0 Kondensatoren mit einem zusätzlichen Schutzgehäuse.

Beim Einsatz von P2 Kondensatoren ist darauf zu achten, dass entweder das von außen zugängliche Metallgehäuse geerdet sein muss, d.h. es ist eine Erdungsleitung vorzusehen, oder die Installation des Kondensators innerhalb eines Gerätes muss derart erfolgen, dass ein Berühren des Kondensatorgehäuses nicht möglich ist, z.B. in einer unzugänglichen Nische oder Ausnehmung des Gerätes. Das Vorsehen einer Erdungsleitung ist jedoch nachteilig, da die Installation bzw. Verschaltung dadurch aufwendiger und kostspieliger wird.

Eine andere Möglichkeit besteht darin, P0 Kondensatoren mit einem zusätzlichen Schutzgehäuse oder überhaupt einem Plastikgehäuse zu verwenden.

Bei der Anwendung in Kompressoren, insbesondere Kältemittelkompressoren, bestehen besondere Anforderungen an die Sicherheit, da hier der Kondensator üblicherweise an der Peripherie des Kompressors angeordnet ist und daher an exponierter Stelle die Gefahr in sich birgt, Personen und Gegenstände zu gefährden. Außerdem ist der zur Verfügung stehende Platz gering, sodass sich das Vorsehen einer Erdungsleitung in dieser Hinsicht als nachteilig gestaltet.

Ziel der vorliegenden Erfindung, die durch die Merkmale des unabhängigen Anspruchs 1 definiert ist, besteht darin, einen Kondensator mit einer Überdruck-Abschalteinrichtung bereitzustellen, der die aus dem Stand der Technik bekannten Nachteile nicht aufweist und den Sicherheitsstandards auch dann genügt, wenn keine Erdung des metallischen Gehäuses vorhanden ist. Ein derartiger Kondensator soll einfach und kostengünstig herstellbar sein. Eine Nachrüstung bestehender Kondensatoren im Hinblick auf diese Vorgaben soll möglich sein.

Dieses Ziel wird mit einem eingangs erwähnten Kondensator dadurch erreicht, dass der erste Abschnitt des Gehäuses eine elektrische Isolierung, insbesondere aus Kunststoff, trägt und von dieser umgeben ist, wobei sich die elektrische Isolierung höchstens bis zur Sicke erstreckt.

Aufgrund der elektrischen Isolierung ist eine Erdung des metallischen Gehäuses nicht mehr nötig. Die Erdungsanschlüsse und -leitungen entfallen, wodurch Herstellung und Einbau einfacher und kostengünstiger erfolgen können. Je nach Anwendungsfall ist der erste Abschnitt teilweise oder vollständig von der Isolierung außen umgeben, jedenfalls aber die im Eibauzustand des Kondensators zugänglichen Bereiche des ersten Abschnitts. Die Isolierung wird vom ersten Abschnitt getragen, d.h. ist am ersten Abschnitt befestigt. Auch bei einer Verlängerung bzw. Streckung des metallischen Gehäuses bei Überdruck im Gehäuseinneren verbleibt die Isolierung am ersten Abschnitt. Die Verlängerung des metallischen Gehäuses bzw. das Auffalten der Sicke wird durch die Isolierung am ersten Abschnitt des Gehäuses nicht beeinträchtigt, da diese höchstens bis zur Sicke reicht. Die erfindungsgemäße Isolierung ist somit nur mit dem ersten Abschnitt verbunden, nicht jedoch mit dem zweiten Abschnitt.

Die Sicke bzw. Faltung besitzt in eingefaltetem Zustand, also bei funktionsfähigem Kondensator vorzugsweise U-förmigen Querschnitt. Die gegenüberliegenden Wände der Sicke können eng aneinander liegen oder einander sogar berühren. Die Sicke verläuft in einer Ebene quer zur Längsachse des metallischen Gehäuses. Während der Streckung des Gehäuses (bei Überdruck) kann die Sicke ganz oder teilweise aufgefaltet werden. Bei der Streckung des Gehäuses bewegen sich der erste Abschnitt und der zweite Abschnitt in axialer Richtung relativ voneinander weg. Üblicherweise erstreckt sich die eingefaltete Sicke ins Gehäuseinnere.

Durch die Erfindung ist es also auch möglich, Kondensatoren der Sicherheitsklasse P2 zu verwenden, ohne das metallische Gehäuse zu erden.

In einer Ausführungsform der Erfindung ist also der Kondensator frei von Erdungsanschlüssen.

Bevorzugt isoliert die elektrische Isolierung zumindest die Stirnseite des ersten Abschnitts und einen an die Stirnseite angrenzenden Mantelabschnitt, dessen Länge (in axialer Richtung) zumindest 70%, vorzugsweise zumindest 90% der Länge des ersten Abschnitts (in axialer Richtung) beträgt, nach außen hin vollständig. Dadurch wird eine vollflächige Isolierung des metallischen Gehäuses über einen großen Bereich erzielt, wobei der gegebenenfalls verbleibende Teil durch eine Abdeckung auf dem zweiten Abschnitt abgedeckt werden kann oder ohnehin im eingebauten Zustand nicht zugänglich ist.

Bevorzugt endet die elektrische Isolierung im Bereich der Sicke. Dadurch wird eine (fast) vollständige Isolierung des zweiten Abschnitts nach außen hin erzielt, wodurch die Sicherheit erhöht wird.

Bevorzugt liegt die elektrische Isolierung zumindest in einem Mantelbereich formschlüssig am metallischen Gehäuse an. Diese Ausbildung erlaubt einerseits eine platzsparende Konstruktion und andererseits eine einfache Anbindung (Kleben oder Presssitz) an den ersten Abschnitt des metallischen Gehäuses.

Bevorzugt ist die elektrische Isolierung durch ein topfförmiges Bauteil, insbesondere ein Spritzgussteil oder ein Tiefziehteil, gebildet, das über den ersten Abschnitt geschoben ist, wobei vorzugsweise das topfförmige Bauteil mittels Presspassung am metallischen Gehäuse befestigt ist. Dies stellt eine besonders kostengünstige und einfach herzustellende Lösung dar, mit der auch bestehende Kondensatoren nachgerüstet werden können.

Bevorzugt ist die elektrische Isolierung eine Beschichtung des metallischen Gehäuses. Dadurch ergibt sich ebenfalls eine zuverlässige sowie kompakte und platzsparende Konstruktion.

Bevorzugt ist die elektrische Isolierung mit dem metallischen Gehäuse verklebt. Dadurch kann gewährleistet werden, dass auch bei einer plötzlichen Streckung des metallischen Gehäuses die Isolierung am ersten Abschnitt zuverlässig festhält.

Bevorzugt weist die elektrische Isolierung eine Dicke von zumindest 1mm auf, wobei vorzugsweise die elektrische Isolierung eine Dicke von höchstens 4mm aufweist. Hiermit kann den Sicherheitsanforderung ohne Probleme genügt werden. Es ist auf den zweiten Abschnitt des Gehäuses eine Abdeckung aufgesetzt, wobei der Randbereich der Abdeckung mit der vom ersten Abschnitt getragenen elektrischen Isolierung in Richtung der Längsachse des Gehäuses zumindest teilweise überlappt. Die Abdeckung besteht aus einem elektrisch isolierenden Material, insbesondere Kunststoff. Diese Maßnahme(n) erhöht die Sicherheit, da auch im Übergangsbereich zuverlässige Isolation vorliegt und damit bestmöglicher Schutz gewährleistet wird.

Bevorzugt ist die elektrische Isolierung im Überlappungsbereich zwischen dem Randbereich der Abdeckung und dem metallischen Gehäuse angeordnet. So kann die Abdeckung auf einfache Weise aufgesetzt werden, ohne die Isolierung zu beschädigen bzw. zu verschieben. Außerdem kann die Isolierung eng am Mantel des ersten Abschnitts anliegen.

Bevorzugt ist zumindest abschnittsweise ein Luftspalt zwischen der Isolierung und dem zweiten Abschnitt des metallischen Gehäuses vorgesehen. Dieser Luftspalt befindet sich bevorzugt zumindest im Mantelbereich. Durch den Luftspalt kann die Sicherheit weiter erhöht werden.

Das Ziel der Erfindung wird auch mit einem Kompressor, insbesondere einem Kältemittelkompressor, erreicht, der einen Kondensator nach einer der oben beschriebenen Ausführungsformen enthält. Gerade bei Kompressoren sind die Kondensatoren extern zugänglich angeordnet und sind daher Gegenstand besonderer Sicherheitsvorkehrungen.

Im Folgenden werden bevorzugte Ausführungsformen der Erfindung anhand der Zeichnung näher beschrieben. Dabei zeigt
Fig. 1 einen Kondensator gemäß dem Stand der Technik in funktionsfähigem Zustand,
Fig. 2 den Kondensator aus Fig. 2 mit ausgedehntem Gehäuse in irreversibel geschädigtem Zustand,
Fig. 3 einen erfindungsgemäßen Kondensator.

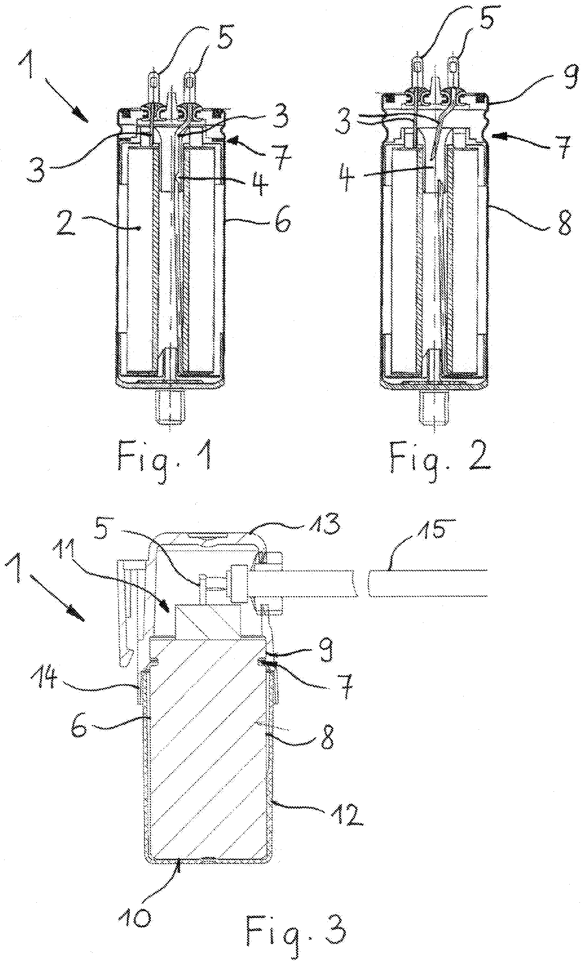

Fig. 1 zeigt einen elektrischen Kondensator 1 mit einem Kondensatorwickel 2 und einem den Kondensatorwickel 2 umschließenden zylindrischen Gehäuse 6 aus Metall. An einer Stirnseite des Gehäuses 6 sind elektrische Anschlüsse 5 vorgesehen. Im Gehäuseinneren verlaufen Anschlussleitungen 3, die den Kondensatorwickel 2 mit den Anschlüssen 5 elektrisch verbinden. Eine der Anschlussleitungen 3 besitzt eine Sollbruchstelle 4, z.B. als Schwächung des Querschnitts. An dieser Sollbruchstelle reißt die Anschlussleitung, wenn sich das Gehäuse 6 ausdehnt (Fig. 2).

Im Mantel des Gehäuses 6 ist eine umlaufende Sicke 7 ausgebildet, die das Gehäuse 6 in einen ersten Abschnitt 8 und einen zweiten Abschnitt 9 teilt und durch Überdruck im Gehäuseinneren auffaltbar ist. Dabei streckt sich das Gehäuse 6 entlang seiner Längsachse. Fig. 1 zeigt dabei den ungestreckten Normalzustand und Fig. 2 den gestreckten Zustand, in dem die Funktion des Kondensators irreversibel beeinträchtigt ist.

Der erste Abschnitt 8 umschließt den Kondensatorwickel 2 und der zweite Abschnitt 9 trägt die Anschlüsse 5.

Fig. 3 zeigt nun einen erfindungsgemäßen Kondensator 1, der in seinem Inneren denselben Aufbau aufweist wie der in Fig. 1 dargestellte Kondensator. Zur Erhöhung der Übersichtlichkeit wurde die innere Struktur des Kondensators 1 in Fig. 3 nicht nochmals dargestellt. Der erste Abschnitt 8 des Gehäuses 6 trägt eine elektrische Isolierung 12, insbesondere aus Kunststoff, und ist von der Isolierung 12 umgeben. Die elektrische Isolierung 12 erstreckt sich erfindungsgemäß höchstens bis zur Sicke 7. Im dargestellten Ausführungsbeispiel endet die elektrische Isolierung 12 im Bereich der Sicke 7. Der zweite Abschnitt 8 trägt an seiner Stirnseite 11 die Anschlüsse 5, die hier bereits mit einer Zuleitung 15 verbunden sind.

In der bevorzugten Ausführungsform isoliert die elektrische Isolierung 12 zumindest die Stirnseite 10 des ersten Abschnitts 8 und einen an die Stirnseite 10 angrenzenden Mantelabschnitt, dessen Länge zumindest 70%, vorzugsweise zumindest 90% der Länge des ersten Abschnitts 8 beträgt, nach außen hin vollständig.

Die elektrische Isolierung 12 kann zumindest in einem Mantelbereich des ersten Abschnitts 8 formschlüssig am metallischen Gehäuse 6 anliegen. Denkbar ist jedoch auch zur Erhöhung der Sicherheit zumindest abschnittsweise einen Luftspalt zwischen dem Mantel des ersten Abschnitts 8 und Isolierung 12 auszubilden.

In Fig. 3 wird die elektrische Isolierung 12 durch ein topfförmiges Bauteil, insbesondere ein Spritzgussteil oder ein Tiefziehteil, gebildet, das über den ersten Abschnitt 8 geschoben ist. Das topfförmige Bauteil kann z.B. mittels Presspassung am ersten Abschnitt 8 des Gehäuses 6 befestigt sein. Eine Alternative wäre die Verwendung eines Klebers.

Eine weitere Möglichkeit bestünde darin, die elektrische Isolierung 12 als isolierende Beschichtung des ersten Abschnitts 8 vorzusehen.

Um erforderliche Sicherheit zu gewährleisten, weist die elektrische Isolierung 12 eine Dicke von zumindest 1mm auf. Bevorzugt ist diese nicht dicker als 4 mm.

In der in Fig. 3 dargestellten Ausführungsform ist auf den zweiten Abschnitt 9 des Gehäuses 6 eine Abdeckung 13 in Form einer Kappe aufgesetzt, wobei der Randbereich 14 der Abdeckung 13 mit der vom ersten Abschnitt 8 getragenen elektrischen Isolierung 12 zumindest teilweise überlappt. Dabei liegt die elektrische Isolierung 12 im Überlappungsbereich zwischen dem Randbereich 14 der Abdeckung 13 und dem metallischen Gehäuse 6.

Die Abdeckung 13 dient als zusätzlicher Schutz und ist ebenfalls aus elektrisch isolierendem Material, insbesondere aus Kunststoff oder Gummi, gefertigt. Sie umfasst eine Durchgangsöffnung, durch die eine mit den Anschlüssen 5 elektrisch verbundene Zuleitung 15 geführt ist.

Die Erfindung ist nicht auf die beschriebenen Ausführungsformen und die darin hervorgehobenen Aspekte beschränkt. Vielmehr ist es möglich, durch Kombination der genannten Mittel und Merkmale weitere Ausführungsvarianten zu realisieren, ohne den Rahmen der Erfindung zu verlassen.

## Patentansprüche

1. Elektrischer Kondensator (1) mit mindestens einem Kondensatorwickel (2), einem den Kondensatorwickel (2) umschließenden zylindrischen Gehäuse (6) aus Metall, elektrischen Anschlüssen (5) und im Gehäuseinneren verlaufende Anschlussleitungen (3), die den Kondensatorwickel (2) mit den Anschlüssen (5) elektrisch verbinden, wobei im Mantel des Gehäuses (6) zumindest eine umlaufende Sicke (7) ausgebildet ist, die das Gehäuse (6) in einen ersten Abschnitt (8) und einen zweiten Abschnitt (9) teilt und durch Überdruck im Gehäuseinneren auffaltbar ist, wobei der erste Abschnitt (8) den Kondensatorwickel (2) umschließt und der zweite Abschnitt (9) die Anschlüsse (5) trägt, wobei der erste Abschnitt (8) des Gehäuses (6) eine elektrische Isolierung (12), insbesondere aus Kunststoff, trägt und von dieser außen umgeben ist, wobei sich die elektrische Isolierung (12) höchstens bis zur Sicke (7) erstreckt und wobei auf den zweiten Abschnitt (9) des Gehäuses (6) eine Abdeckung (13) aus einem elektrisch isolierenden Material, insbesondere Kunststoff aufgesetzt ist, **dadurch gekennzeichnet, dass** zumindest eine Anschlussleitung (3) eine Sollbruchstelle (4) aufweist und dass ein Randbereich (14) der Abdeckung (13) mit der vom ersten Abschnitt (8) getragenen elektrischen Isolierung (12) in Richtung der Längsachse des Gehäuses (6) zumindest teilweise überlappt.

2. Kondensator nach Anspruch 1, **dadurch gekennzeichnet, dass** die elektrische Isolierung (12) zumindest die Stirnseite (10) des ersten Abschnitts (8) und einen an die Stirnseite (10) angrenzenden Mantelabschnitt, dessen Länge zumindest 70%, vorzugsweise zumindest 90% der Länge des ersten Abschnitts (8) beträgt, nach außen hin vollständig isoliert.

3. Kondensator nach Anspruch 1 oder 2, **dadurch gekennzeichnet, dass** die elektrische Isolierung (12) im Bereich der Sicke (7) endet.

4. Kondensator nach einem der vorhergehenden Ansprüche, **dadurch gekennzeichnet, dass** die elektrische Isolierung (12) zumindest in einem Mantelbereich des ersten Abschnitts (8) formschlüssig am metallischen Gehäuse (6) anliegt.

5. Kondensator nach einem der vorhergehenden Ansprüche, **dadurch gekennzeichnet, dass** die elektrische Isolierung (12) durch ein topfförmiges Bauteil, insbesondere ein Spritzgussteil oder ein Tiefziehteil, gebildet ist, das über den ersten Abschnitt (8) geschoben ist, wobei vorzugsweise das topfförmige Bauteil mittels Presspassung am ersten Abschnitt (8) des Gehäuses (6) befestigt ist.

6. Kondensator nach einem der vorhergehenden Ansprüche, **dadurch gekennzeichnet, dass** die elektrische Isolierung (12) eine Beschichtung des ersten Abschnitts (8) des metallischen Gehäuses (6) ist.

7. Kondensator nach einem der vorhergehenden Ansprüche, **dadurch gekennzeichnet, dass** die elektrische Isolierung (12) mit dem ersten Abschnitt (8) des metallischen Gehäuses (6) verklebt ist.

8. Kondensator nach einem der vorhergehenden Ansprüche, **dadurch gekennzeichnet, dass** die elektrische Isolierung (12) eine Dicke von zumindest 1mm aufweist, wobei vorzugsweise die elektrische Isolierung (12) eine Dicke von höchstens 4mm aufweist.

9. Kondensator nach einem der vorhergehenden Ansprüche, **dadurch gekennzeichnet, dass** die elektrische Isolierung (12) im Überlappungsbereich zwischen dem Randbereich (14) der Abdeckung (13) und dem metallischen Gehäuse (6) angeordnet ist.

## Claims

1. Electric capacitor (1) having at least one capacitor coil (2), a cylindrical housing (6) that surrounds the capacitor coil (2), composed of metal, electric connectors (5), and connection lines (3) that run in the housing interior and electrically connect the capacitor coil (2) with the connectors (5), wherein at least one circumferential depression (7) is formed in the mantle of the housing (6), which depression divides the housing (6) into a first segment (8) and a second segment (9) and can be unfolded by means of excess pressure in the housing interior, wherein the first segment (8) surrounds the capacitor coil (2) and the second segment (9) carries the connectors (5), wherein the first segment (8) of the housing (6) carries an electric insulation (12), particularly composed of plastic, and is surrounded by this insulation on the outside, wherein the electric insulation (12) extends at most all the way to the depression (7), and wherein a covering (13) composed of an electrically insulating material, particularly of plastic, is set onto the second segment (9) of the housing (6), **characterized in that** at least one connection line (3) has a planned breaking point (4), and that an edge region (14) of the covering (13) overlaps, at least in part, with the electric insulation (12) carried by the first segment (8), in the direction of the longitudinal axis of the housing (6).

2. Capacitor according to claim 1, **characterized in that** the electric insulation (12) insulates at least the face side (10) of the first segment (8) and a mantle segment that borders on the face side (10), the length of which segment amounts to at least 70%, preferably to at least 90%, of the length of the first segment (8), completely toward the outside.

3. Capacitor according to claim 1 or 2, **characterized in that** the electric insulation (12) ends in the region of the depression (7).

4. Capacitor according to anyone of the preceding claims, **characterized in that** the electric insulation (12) lies against the metallic housing (6) with shape fit, at least in a mantle region of the first segment (8).

5. Capacitor according to anyone of the preceding claims, **characterized in that** the electric insulation (12) is formed by a pot-shaped component, particularly of an injection-molded part or a deep-drawn part, which is pushed over the first segment (8), wherein preferably the pot-shaped component is attached to the first segment (8) of the housing (6) by means of press fit.

6. Capacitor according to anyone of the preceding claims, **characterized in that** the electric insulation (12) is a coating of the first segment (8) of the metallic housing (6).

7. Capacitor according to anyone of the preceding claims, **characterized in that** the electric insulation (12) is glued to the first segment (8) of the metallic housing (6).

8. Capacitor according to anyone of the preceding claims, **characterized in that** the electric insulation (12) has a thickness of at least 1 mm, wherein preferably the electric insulation (12) has a thickness of at most 4 mm.

9. Capacitor according to anyone of the preceding claims, **characterized in that** the electric insulation (12) is disposed in the overlap region between the edge region (14) of the covering (13) and the metallic housing (6).

## Revendications

1. Condensateur électrique (1) comportant au moins un enroulement de condensateur (2), un boîtier cylindrique (6) en métal entourant l'enroulement de condensateur (2), des bornes électriques (5) et des lignes de connexion (3) s'étendant à l'intérieur du boîtier et reliant électriquement l'enroulement de condensateur (2) aux bornes (5), dans lequel au moins une rainure (7) périphérique est formée dans l'enveloppe du boîtier (6), laquelle divise le boîtier (6) en une première partie (8) et une seconde partie (9) et peut être dépliée par une surpression à l'intérieur du boîtier, dans lequel la première partie (8) entoure l'enroulement de condensateur (2) et la seconde partie (9) porte les bornes (5), dans lequel la première partie (8) du boîtier (6) porte une isolation électrique (12), en particulier en matière plastique, et est entourée par celle-ci extérieurement, l'isolation électrique (12) s'étendant au maximum jusqu'à la rainure (7) et un élément de recouvrement (13) dans un matériau électriquement isolant, en particulier en matière plastique, étant posé sur la seconde partie (9) du boîtier (6), **caractérisé en ce qu'**au moins une ligne de connexion (3) possède un point de moindre résistance mécanique (4) et qu'une zone de bordure (14) de l'élément de recouvrement (13) chevauche au moins partiellement l'isolation électrique (12) portée par la première partie (8) dans la direction de l'axe longitudinal du boîtier (6).

2. Condensateur selon la revendication 1, **caractérisé en ce que** l'isolation électrique (12) isole complètement vers l'extérieur au moins la face frontale (10) de la première partie (8) et une partie d'enveloppe adjacente à la face frontale (10) dont la longueur est d'au moins 70 %, de préférence d'au moins 90 % de la longueur de la première partie (8).

3. Condensateur selon la revendication 1 ou 2, **caractérisé en ce que** l'isolation électrique (12) se termine au voisinage de la rainure (7).

4. Condensateur selon l'une des revendications précédentes, **caractérisé en ce que** l'isolation électrique (12) est appliquée sur le boîtier métallique (6) par complémentarité de formes au moins dans une zone d'enveloppe de la première partie (8).

5. Condensateur selon l'une des revendications précédentes, **caractérisé en ce que** l'isolation électrique (12) est formée par un élément en forme de pot, en particulier une pièce moulée par injection ou une pièce emboutie, qui est poussée sur la première partie (8), l'élément en forme de pot étant de préférence fixé à la première partie (8) du boîtier (6) par ajustement serré.

6. Condensateur selon l'une des revendications précédentes, **caractérisé en ce que** l'isolation électrique (12) est un revêtement de la première partie (8) du boîtier métallique (6).

7. Condensateur selon l'une des revendications précédentes, **caractérisé en ce que** l'isolation électrique (12) est collée avec la première partie (8) du boîtier métallique (6).

8. Condensateur selon l'une des revendications précédentes, **caractérisé en ce que** l'isolation électrique (12) présente une épaisseur d'au moins 1 mm, l'isolation électrique (12) présentant de préférence une épaisseur maximale de 4 mm.

9. Condensateur selon l'une des revendications précédentes, **caractérisé en ce que** l'isolation électrique (12) est disposée dans la zone de chevauchement entre la zone de bordure (14) de l'élément de recouvrement (13) et le boîtier métallique (6).
